# EUROPÄISCHE PATENTANMELDUNG

(11) **EP 3 798 054 A1**
(43) Veröffentlichungstag der Anmeldung: **31.03.2021**
(21) Anmeldenummer: 19199881.4
(22) Anmeldetag: 26.09.2019
(51) Int. Cl.: B60P 1/26, B60P 1/28

(54) **KIPPMULDE FÜR EIN FAHRZEUG**

(71) Anmelder: Schmitz Cargobull AG, 48341 Altenberge (DE)
(72) Erfinder: Heinke, Christopher, 04600 Altenburg (DE); Reinhardt, Frank, 99947 Bad Langensalza (DE)
(74) Vertreter: Liedtke & Partner Patentanwälte

(57) **Zusammenfassung**

Die Erfindung betrifft einen Ladegutbehälter (2) für ein Fahrzeug mit einem Behälterkörper (2.1), welcher zumindest eine Behälteröffnung aufweist und zumindest zwei an gegenüberliegenden Behälterwänden (2.3, 2.4) des Behälterkörpers (2.1) angeordnete Trägeranordnungen (6), welche jeweils zur Aufnahme von mehreren verschiedenen Lagertypen zu einer pendelnden Lagerung einer die Behälteröffnung verschließenden Behälterklappe (3) ausgebildet sind.

Die Erfindung betrifft weiterhin ein Verfahren zur Herstellung eines Ladegutbehälters (2) für ein Fahrzeug und eine Fahrzeugbehälteranordnung (1), umfassend einen Ladegutbehälter (2) und eine pendelnd an diesem aufgehängte Behälterklappe (3).

## Beschreibung

Die Erfindung betrifft einen Ladegutbehälter für ein Fahrzeug.

Die Erfindung betrifft weiterhin eine Fahrzeugbehälteranordnung, umfassend einen solchen Ladegutbehälter und eine pendelnd an diesem aufgehängte Behälterklappe.

Aus dem Stand der Technik sind allgemein Fahrzeugbehälteranordnungen mit um eine horizontale Schwenkachse schwenkbaren Behälterklappen bekannt. Um beim Transport von Schüttgut ein Austreten desselben zu vermeiden, ist ein möglichst geringer Freiraum zwischen der Behälterklappe und einer Behälterwand des Ladegutbehälters im Bereich einer durch die Behälterklappe verschlossenen Behälteröffnung des Ladegutbehälters wesentlich. Zugleich soll aber auch sichergestellt sein, dass die Behälterklappe bei einem Kippvorgang des Ladegutbehälters zuverlässig pendelnd öffnet.

Für eine hierfür vorgenommene genaue Ausrichtung der Behälterklappe bezüglich der Behälteröffnung ist es bekannt, eine Gelenkanordnung an einem Trägerkörper anzuordnen, welcher an dem Ladegutbehälter befestigt ist, wobei eine Position des Trägerkörpers und damit auch eine durch diesen gegebene Position der Schwenkachse relativ zu dem Ladegutbehälter verstellbar ist.

Beispielsweise ist aus der EP 1 719 660 A2 eine Fahrzeugbehälteranordnung mit einer um eine horizontale Schwenkachse an einem Behälterrahmen pendelnd gehaltenen Behälterwand bekannt, welche als Kippmulde mit einer pendelnd aufgehängten Heckklappe ausgebildet ist. Die Behälterwand und der Behälterrahmen sind über eine Schwenkgelenkanordnung verbunden, welche einen an dem Behälterrahmen befestigten Trägerkörper mit einem rahmenseitigen Gelenkteil und Justiereinrichtungen zur Einstellung einer Position des Trägerkörpers quer zur Schwenkachse enthält. Die Justiereinrichtungen enthalten ein um eine erste Drehachse drehbares erstes Stellglied mit einer zur ersten Drehachse exzentrisch verlaufenden Anlagefläche, über welche der Trägerkörper gegen den Behälterrahmen abgestützt ist. Weiterhin enthalten die Justiereinrichtungen ein um eine zweite Drehachse drehbares zweites Stellglied mit einer zur zweiten Drehachse exzentrisch verlaufenden zweiten Anlagefläche, über welche der Trägerkörper gegen den Behälterrahmen abgestützt ist. Dabei verlaufen die erste und die zweite Drehachse parallel zur Schwenkachse.

Der Erfindung liegt die Aufgabe zu Grunde, einen gegenüber dem Stand der Technik verbesserten Ladegutbehälter für ein Fahrzeug, ein neuartiges Verfahren zur Herstellung eines Ladegutbehälters für ein Fahrzeug und eine verbesserte Fahrzeugbehälteranordnung, umfassend einen Ladegutbehälter und eine pendelnd an diesem aufgehängte Behälterklappe, anzugeben.

Die Aufgabe wird erfindungsgemäß gelöst mit einem Ladegutbehälter, welcher die im Anspruch 1 angegebenen Merkmale aufweist, mit einem Verfahren, welches die im Anspruch 11 angegebenen Merkmale aufweist, und mit einer Fahrzeugbehälteranordnung, welche die im Anspruch 12 angegebenen Merkmale aufweist.

Vorteilhafte Ausgestaltungen der Erfindung sind Gegenstand der Unteransprüche.

Der erfindungsgemäße Ladegutbehälter für ein Fahrzeug, beispielsweise eine Kippmulde für ein Fahrzeug, umfasst einen Behälterkörper, welcher zumindest eine Behälteröffnung aufweist und zumindest zwei an gegenüberliegenden Behälterwänden des Behälterkörpers angeordnete Trägeranordnungen, welche jeweils zur Aufnahme von mehreren verschiedenen Lagertypen zu einer pendelnden Lagerung einer die Behälteröffnung verschließenden Behälterklappe ausgebildet sind.

Aufgrund der für mehrere verschiedene Lagertypen ausgebildeten Trägeranordnungen und eines damit verbundenen erhöhten Gleichteileeinsatzes ist eine signifikant vereinfachte und somit besonders kostengünstige Herstellung des Ladegutbehälters realisierbar. Dabei ermöglicht der Ladegutbehälter eine Anordnung einer Behälterklappe mit unterschiedlichen Lagertypen. Somit ist es möglich, Ladegutbehälter auch ohne das Wissen eines später verwendeten Lagertyps herzustellen, und erst bei einem beispielsweise von einem Nutzer gewünschten Lagertyp eine entsprechende Behälterklappe mit dem gewünschten Lagertyp zu verbauen. Auch kann nachträglich ein verbauter Lagertyp geändert werden, wenn beispielsweise für den Ladegutbehälter eine andere Funktion vorgesehen ist oder ein Nutzer andere Präferenzen hat.

In einer möglichen Ausgestaltung des Ladegutbehälters sind die Trägeranordnungen zur Aufnahme der Lagertypen "einfaches Pendellager", "hochgesetztes Pendellager", "doppeltes Pendellager" und/oder "hydraulisches Pendellager" ausgebildet. Unter einem einfachen Pendellager wird dabei insbesondere ein Lagertyp verstanden, welcher einen Pendelarm umfasst, welcher an einem Ende unbeweglich an der Behälterklappe befestigt ist und an einem anderen Ende mittels eines Gelenkbolzens schwenkbar an der Trägeranordnung angeordnet ist. Unter einem hochgesetzten Pendellager wird dabei insbesondere ein Lagertyp verstanden, welcher einen Pendelarm umfasst, welcher an einem Ende unbeweglich an der Behälterklappe befestigt ist und an einem anderen Ende mittels eines Gelenkbolzens schwenkbar an einem an der Trägeranordnung mittels Befestigungsbolzen befestigten Adapter angeordnet ist, wobei der Adapter zumindest eine Aufnahme für den Gelenkbolzen umfasst, welche oberhalb der Trägeranordnung angeordnet ist. Unter einem doppelten Pendellager wird dabei insbesondere ein Lagertyp verstanden, welcher einen ersten Pendelarm umfasst, welcher an einem ersten Ende unbeweglich an der Behälterklappe befestigt ist, und welcher einen zweiten Pendelarm umfasst, welcher an einem ersten Ende schwenkbar an einem zweiten Ende des ersten Pendelarms und an einem zweiten Ende mittels eines Gelenkbolzens schwenkbar an der Trägeranordnung angeordnet ist. Unter einem hydraulischen Pendellager wird insbesondere ein Lagertyp verstanden, der ein doppeltes Pendellager umfasst, bei welchem der zweite Pendelarm mit einem hydraulischen Antrieb gekoppelt ist, mittels welchem ein Schwenken des zweiten Pendelarms um den an der Trägeranordnung angeordneten Gelenkbolzen durchführbar ist. Die genannten Lagertypen ermöglichen je nach vorgesehener Anwendung eine zuverlässige sowie einfache Öffnung und einen sicheren Verschluss der Heckklappe, so dass einerseits eine zuverlässige Entladung aus dem Ladegutbehälter und andererseits eine zuverlässige Sicherung einer Ladung in dem Ladegutbehälter möglich sind.

In einer weiteren möglichen Ausgestaltung des Ladegutbehälters sind die Trägeranordnungen als Gleichteile ausgebildet, so dass Herstellungskosten signifikant verringert werden können.

In einer weiteren möglichen Ausgestaltung des Ladegutbehälters weisen die Trägeranordnungen jeweils einen Grundkörper auf, welcher jeweils mehrere in unterschiedlichen Positionen angeordnete Aufnahmen für Gelenkbolzen der verschiedenen Lagertypen umfasst. Der Grundkörper mit den Aufnahmen kann in besonders einfacher Weise an dem Ladegutbehälter ausgerichtet und befestigt werden, wobei hierbei das Erfordernis zur Ausrichtung jeder einzelnen Aufnahme entfällt.

In einer möglichen Ausgestaltung des Ladegutbehälters ist der Grundkörper als kastenförmiges Profil ausgebildet, wobei eine Aufnahme für einen Gelenkbolzen jeweils zwei an sich gegenüberliegenden Seiten befindlichen Kastenwänden des Profils befindliche Öffnungen umfasst. Eine solche Ausbildung des Grundkörpers ermöglicht eine einfache, stabile und sichere Lagerung von Gelenkbolzen und daraus folgend eine hohe Stabilität und Lebensdauer des entsprechenden Lagers. Weiterhin ist eine besonders einfache Montage der jeweiligen Gelenkbolzen sichergestellt.

In einer weiteren möglichen Ausgestaltung des Ladegutbehälters umfasst das Profil einen Raum zur Aufnahme eines mittels eines Gelenkbolzens gelagerten Pendelarms. Somit ist der Gelenkbolzen sicher vor äußeren Einflüssen geschützt.

In einer weiteren möglichen Ausgestaltung des Ladegutbehälters umfasst das Profil einen beispielsweise in seiner Position verstellbaren Anschlag zur Festlegung einer Position des Pendelarms in einem ungeschwenkten Zustand. Der Anschlag ermöglicht eine einfache und sichere Festlegung der Position des Pendelarms im ungeschwenkten Zustand, wobei eine Verstellung der Position des Anschlags eine Anpassung desselben an die unterschiedlichen Lagertypen und/oder unterschiedlich ausgebildete Pendelarme ermöglicht.

In einer weiteren möglichen Ausgestaltung des Ladegutbehälters sind an dem Grundkörper mehrere Ausrichtstrukturen angeordnet, mittels welchen der Grundkörper an der entsprechenden Behälterwand ausgerichtet ist. Diese Ausrichtstrukturen ermöglichen vor einer Verbindung des Grundkörpers eine Ausrichtung desselben relativ zum Ladegutbehälter und zum Grundkörper der anderen Trägeranordnung. Somit ist keine weitere aufwändige Ausrichtung der Trägeranordnungen vor oder bei Montage der Behälterklappe erforderlich.

In einer weiteren möglichen Ausgestaltung des Ladegutbehälters sind die Trägeranordnungen jeweils mit der entsprechenden Behälterwand verschweißt. Eine solche Verschweißung ermöglicht eine dauerhaft gleiche Positionierung der Trägeranordnungen und vermeidet nachträgliche Justagen der Trägeranordnung im Betrieb des Fahrzeugs, wie sie beispielsweise bei einer Verstellung einer kraft- und/oder formschlüssigen Verbindung auftreten können.

In einer weiteren möglichen Ausgestaltung des Ladegutbehälters umfasst dieser einen Behälterboden, wobei die zwei gegenüberliegenden Behälterwände nach oben vom Behälterboden abragen und die Trägeranordnungen jeweils beabstandet vom Behälterboden an den Behälterwänden angeordnet sind. Ein so ausgebildeter Ladegutbehälter eignet sich zur Anordnung einer pendelnden Behälterklappe und insbesondere zur Verwendung als Kippmulde für ein Fahrzeug.

In dem erfindungsgemäßen Verfahren zur Herstellung eines Ladegutbehälters für ein Fahrzeug werden zumindest zwei Trägeranordnungen, welche jeweils zur Aufnahme von mehreren verschiedenen Lagertypen zu einer pendelnden Lagerung einer die Behälteröffhung verschließenden Behälterklappe ausgebildet sind, an gegenüberliegenden Behälterwänden des Behälterkörpers angeordnet. Weiterhin werden die Trägeranordnungen relativ zueinander und zu dem Ladegutbehälter ausgerichtet und in einer ausgerichteten Position fixiert und jeweils in der ausgerichteten Position mit der entsprechenden Behälterwand verschweißt.

Aufgrund der für mehrere verschiedene Lagertypen ausgebildeten Trägeranordnungen und eines damit verbundenen erhöhten Gleichteileeinsatzes ist eine signifikant vereinfachte und somit besonders kostengünstige Herstellung des Ladegutbehälters realisierbar. Dabei ermöglicht das Verfahren eine Herstellung eines Ladegutbehälters, welche eine Anordnung einer Behälterklappe mit unterschiedlichen Lagertypen erlaubt. Somit ist es möglich, Ladegutbehälter auch ohne das Wissen eines später verwendeten Lagertyps herzustellen, und erst bei einem beispielsweise von einem Nutzer gewünschten Lagertyp eine entsprechende Behälterklappe mit dem gewünschten Lagertyp zu verbauen. Auch kann nachträglich ein verbauter Lagertyp geändert werden, wenn beispielsweise für den Ladegutbehälter eine andere Funktion vorgesehen ist oder ein Nutzer andere Präferenzen hat. Die Ausrichtung der Trägeranordnungen und das anschließende Verschweißen derselben mit der entsprechenden Behälterwand ermöglichen einerseits, dass keine weitere aufwändige Ausrichtung der Trägeranordnungen vor oder bei Montage der Behälterklappe erforderlich ist. Andererseits ermöglicht die Verschweißung eine dauerhaft gleiche Positionierung der Trägeranordnungen und vermeidet nachträgliche Justagen der Trägeranordnung im Betrieb des Fahrzeugs, wie sie beispielsweise bei einer Verstellung einer kraft- und/oder formschlüssigen Verbindung auftreten können.

Die erfindungsgemäße Fahrzeugbehälteranordnung umfasst einen Ladegutbehälter gemäß der vorherigen Beschreibung und eine pendelnd an diesem aufgehängte Behälterklappe. Aufgrund der für mehrere verschiedene Lagertypen ausgebildeten Trägeranordnungen und eines damit verbundenen erhöhten Gleichteileeinsatzes ist eine signifikant vereinfachte und somit besonders kostengünstige Herstellung der Fahrzeugbehälteranordnung realisierbar. Dabei können Behälterklappen mit unterschiedlichen Lagertypen verwendet werden. Unter anderem ist es so möglich, nachträglich einen verbauten Lagertyp zu ändern, wenn beispielsweise für die Fahrzeugbehälteranordnung eine andere Funktion vorgesehen ist oder ein Nutzer andere Präferenzen hat.

In einer möglichen Ausgestaltung der Fahrzeugbehälteranordnung sind zwei Pendellager eines Lagertyps vorgesehen, welche jeweils an einer Trägeranordnung und an der Behälterklappe derart befestigt sind, dass zwischen den Pendellagern eine Schwenkachse der Behälterklappe ausgebildet ist. Die Schwenkachse ermöglicht ein zuverlässiges Schwenken bzw. Pendeln der Behälterklappe und insbesondere bei der Ausbildung des Lagertyps als einfaches Pendellager, hochgesetztes Pendellager oder doppeltes Pendellager ein zuverlässiges selbsttätiges Öffnen der Behälterklappe bei einer auf diese mittels eines Ladeguts ausgeübten Kraft.

In einer weiteren möglichen Ausgestaltung der Fahrzeugbehälteranordnung umfasst der als einfaches Pendellager ausgebildete Lagertyp einen Pendelarm, welcher an einem Ende unbeweglich an der Behälterklappe befestigt ist und an einem anderen Ende mittels eines Gelenkbolzens schwenkbar an der Trägeranordnung angeordnet ist. Ein solches einfaches Pendellager ist besonders einfach und mit geringem Teile- und Kostenaufwand realisierbar und ermöglicht ein Schwenken bzw. Pendeln der Behälterklappe um eine Schwenkachse.

In einer weiteren möglichen Ausgestaltung der Fahrzeugbehälteranordnung umfasst der als hochgesetztes Pendellager ausgebildete Lagertyp einen Pendelarm, welcher an einem Ende unbeweglich an der Behälterklappe befestigt ist und an einem anderen Ende mittels eines Gelenkbolzens schwenkbar an einem an der Trägeranordnung mittels Befestigungsbolzen befestigten Adapter angeordnet ist. Der Adapter umfasst zumindest eine Aufnahme für den Gelenkbolzen, welche oberhalb der Trägeranordnung angeordnet ist. Ein solches hochgesetztes Pendellager ist ebenfalls besonders einfach und mit geringem Teile- und Kostenaufwand realisierbar und ermöglicht gegenüber dem einfachen Pendellager aufgrund einer Verlagerung des Gelenkbolzens und somit der Schwenkachse der Behälterklappe nach oben einen vergrößerten Freiraum zur Entladung des Ladeguts bei geöffneter Behälterklappe.

In einer weiteren möglichen Ausgestaltung der Fahrzeugbehälteranordnung umfasst der als doppeltes Pendellager ausgebildete Lagertyp einen ersten Pendelarm, welcher an einem ersten Ende unbeweglich an der Behälterklappe befestigt ist, und einen zweiten Pendelarm, welcher an einem ersten Ende schwenkbar an einem zweiten Ende des ersten Pendelarms und an einem zweiten Ende mittels eines Gelenkbolzens schwenkbar an der Trägeranordnung angeordnet ist. Ein solches doppeltes Pendellager ermöglicht durch den zweiten Pendelarm eine Verschiebung der Schwenkachse, ausgehend von einem Behälterboden insbesondere nach oben, so dass eine Führung der Behälterklappe bei deren Öffnung sowie eine Größe der mittels der Behälterklappe freigegebenen Behälteröffnung beeinflussbar sind. Auch kann mittels des zweiten Pendelarms eine Fixierung der Behälterklappe in deren geschlossenem Zustand bei gleichzeitig selbsttätiger Öffnung während eines Kippvorgangs des Ladegutbehälters realisiert werden, wenn die Fahrzeugbehälteranordnung eine Kippmulde mit Heckklappe ist.

In einer weiteren möglichen Ausgestaltung der Fahrzeugbehälteranordnung umfasst der als hydraulisches Pendellager ausgebildete Lagertyp ein doppeltes Pendellager, bei welchem der zweite Pendelarm mit einem hydraulischen Antrieb gekoppelt ist, mittels welchem ein Schwenken des zweiten Pendelarms um den an der Trägeranordnung angeordneten Gelenkbolzen durchführbar ist. Dieser Lagertyp weist die gleichen Merkmale wie das doppelte Pendellager auf, mit dem Unterschied, dass ein Schwenken des zweiten Pendelarms mittels des hydraulischen Antriebs steuerbar ist und somit beispielsweise auch eine Fixierung der Behälterklappe in deren geschlossenem Zustand während eines Kippvorgangs einer Kippmulde an einer beliebigen Position gelöst werden kann.

In einer weiteren möglichen Ausgestaltung der Fahrzeugbehälteranordnung ist der Ladegutbehälter eine um zumindest eine Kippachse schwenkbare Kippmulde und die Behälterklappe ist eine Heckklappe, welche um eine Schwenkachse pendelnd gelagert ist, die zumindest im Wesentlichen parallel zu der Kippachse verläuft. Auch kann die Fahrzeugbehälteranordnung eine Mulde mit Behälterklappe umfassen, bei welcher ein Ladegut mittels eines Schiebers aus der Mulde durch die mittels der Heckklappe verschließbare und freigebbare Behälteröffnung schiebbar ist.

Ausführungsbeispiele der Erfindung werden im Folgenden anhand von Zeichnungen näher erläutert.

Darin zeigen:
- Figur 1: schematisch eine perspektivische Ansicht eines Ausschnitts einer Fahrzeugbehälteranordnung,
- Figur 2: schematisch eine perspektivische und teiltransparente Darstellung einer Trägeranordnung und einer an dieser mittels eines einfachen Pendellagers gelagerten Behälterklappe einer Fahrzeugbehälteranordnung,
- Figur 3: schematisch eine perspektivische und teiltransparente Darstellung einer Trägeranordnung und einer an dieser mittels eines hochgesetzten Pendellagers gelagerten Behälterklappe einer Fahrzeugbehälteranordnung,
- Figur 4: schematisch eine perspektivische und teiltransparente Darstellung einer Trägeranordnung und einer an dieser mittels eines doppelten Pendellagers gelagerten Behälterklappe einer Fahrzeugbehälteranordnung und
- Figur 5: schematisch eine perspektivische und teiltransparente Darstellung einer Trägeranordnung und einer an dieser mittels eines hydraulischen Pendellagers gelagerten Behälterklappe einer Fahrzeugbehälteranordnung.

Einander entsprechende Teile sind in allen Figuren mit den gleichen Bezugszeichen versehen.

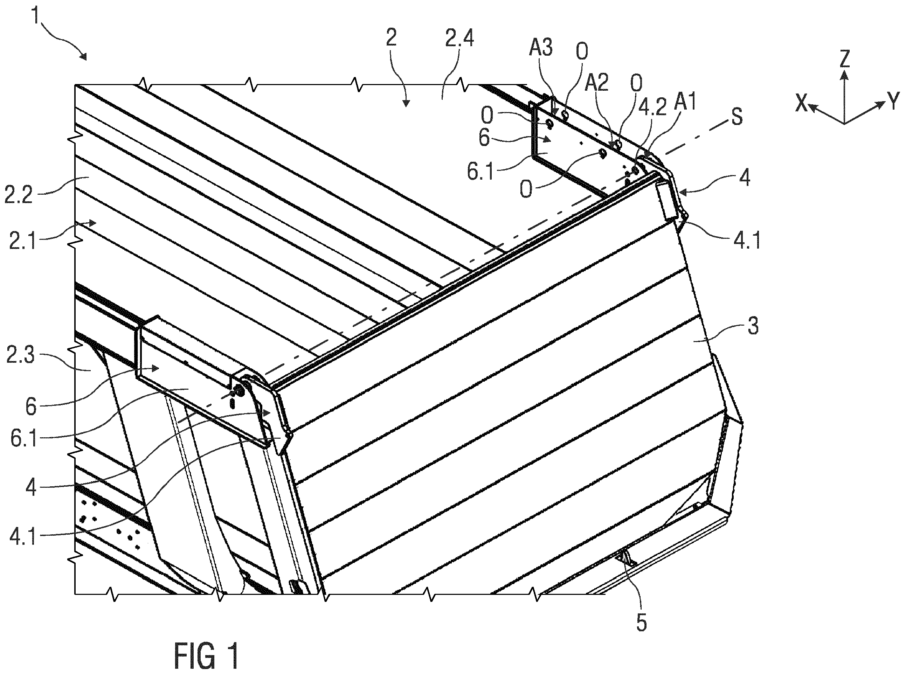

In **Figur 1** ist in einer perspektivischen Ansicht ein Ausschnitt eines möglichen Ausführungsbeispiels einer Fahrzeugbehälteranordnung 1 dargestellt. Weiterhin ist ein Koordinatensystem mit einer Längsachse X, einer Querachse Y und einer Hochachse Z dargestellt.

Die Fahrzeugbehälteranordnung 1 umfasst einen als so genannte Kippmulde ausgebildeten Ladegutbehälter 2 mit einer als Heckklappe ausgebildeten Behälterklappe 3.

Der Ladegutbehälter 2 umfasst einen Behälterkörper 2.1 mit einem Behälterboden 2.2 und zwei gegenüberliegende seitliche Behälterwände 2.3, 2.4, welche vom Behälterboden 2.2 nach oben abragen. Weiterhin umfasst der Ladegutbehälter 2 eine der Behälterklappe 3 gegenüberliegende, die beiden seitlichen Behälterwände 2.3, 2.4 verbindende Stirnwand, welche aufgrund des Ausschnitts jedoch nicht näher dargestellt ist.

Der Ladegutbehälter 2 ist derart gelagert, dass dieser um eine nicht gezeigte Kippachse, welche in Richtung der Querachse Y verläuft, gekippt werden kann.

Der Kippvorgang erfolgt dabei derart, dass eine Seite des Ladegutbehälters 2, an welchem sich die Stirnwand befindet, nach oben geführt wird und somit ein in dem Ladegutbehälter 2 befindliches Ladegut, insbesondere Schüttgut, aufgrund der Schwerkraft durch eine von der Behälterklappe 3 verschließbare und freigebbare Behälteröffhung entladen werden kann.

Zu dieser Freigabe der Behälteröffhung ist die Behälterklappe 3 mittels einfacher Pendellager 4 um eine Schwenkachse S schwenkbar bzw. pendelnd gelagert und öffnet sich bei Überschreitung eines vorgegebenen Kippwinkels dann, wenn eine am Behälterboden 2.2 angeordnete Sicherheitssperre 5 gelöst ist. Die Sicherheitssperre 5 verhindert im gesperrten Zustand, dass die Behälterklappe 3 sich ungewollt öffnet. Die Schwenkachse S verläuft dabei zumindest im Wesentlichen parallel zur Kippachse des Ladegutbehälters 2.

Die einfachen Pendellager 4 umfassen jeweils einen Pendelarm 4.1, welcher an einem Ende unbeweglich an der Behälterklappe 3 befestigt ist und an einem anderen Ende mittels eines Gelenkbolzens 4.2 schwenkbar an einer Trägeranordnung 6 angeordnet ist.

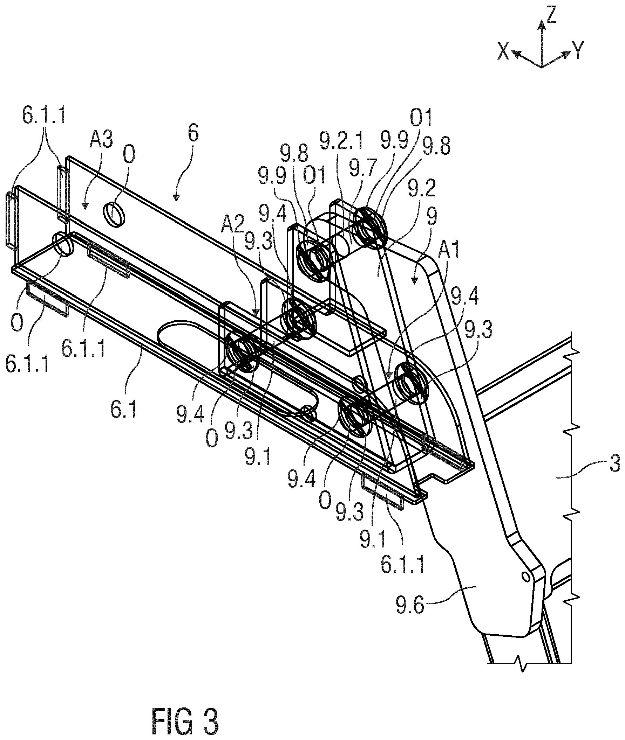

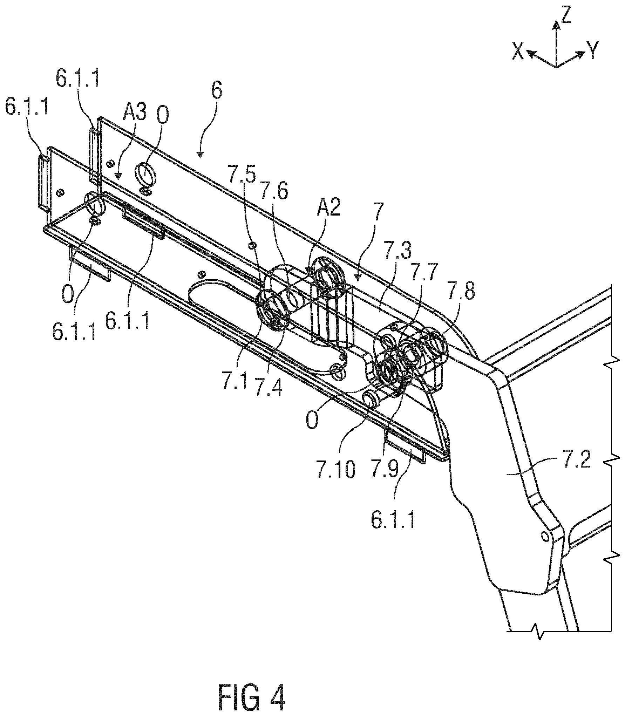

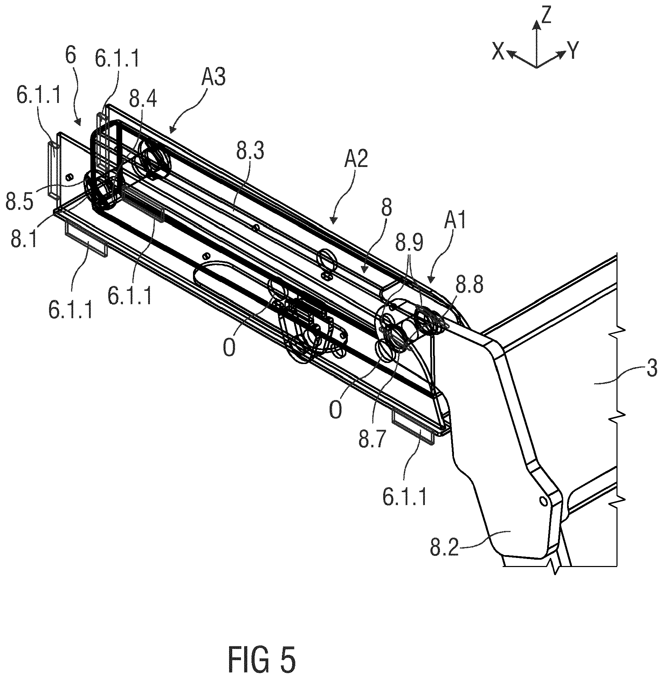

Die Trägeranordnungen 6 sind als Gleichteile ausgebildet und an oberen, der Stirnwand und dem Behälterboden 2.1 abgewandten Enden der Behälterwände 2.3, 2.4 sich gegenüberliegend angeordnet. Dabei sind die Trägeranordnungen 6 jeweils zur Aufnahme von mehreren verschiedenen Lagertypen, insbesondere dem einfachen Pendellager 4, einem in Figur 3 näher dargestellten hochgesetzten Pendellager, einem in Figur 4 näher dargestellten doppelten Pendellager 7 und einem in Figur 5 näher dargestellten hydraulischen Pendellager 8, zur pendelnden Lagerung der Behälterklappe 3 ausgebildet.

Hierzu umfassen die Trägeranordnungen 6 jeweils einen Grundkörper 6.1, welcher jeweils mehrere in unterschiedlichen Positionen angeordnete Aufnahmen A1 bis A3 für Gelenkbolzen 4.2, 7.1, 8.1 und Befestigungsbolzen 9.1 der verschiedenen Lagertypen umfasst. Dabei ist der Grundkörper 6.1 als kastenförmiges Profil ausgebildet und die Aufnahmen A1 bis A3 für die Gelenkbolzen 4.2, 7.1, 8.1 und Befestigungsbolzen 9.1 umfassen jeweils zwei an sich gegenüberliegenden Seiten befindlichen Kastenwänden des Profils befindliche Öffnungen O.

Zusätzlich sind die Trägeranordnungen 6 in Abschnitten, welche außerhalb eines Schwenkbereichs des Pendelarms 4.1 liegen, mit einer Abdeckung 6.2 versehen.

Um eine dauerhaft stabile Befestigung der Trägeranordnungen 6 an dem Behälterkörper 2.1 zu ermöglichen, sind diese jeweils mit der entsprechenden Behälterwand 2.3, 2.4 verschweißt. Hierzu werden die Trägeranordnungen 6 an den gegenüberliegenden Behälterwänden 2.3, 2.4 des Behälterkörpers 2.1 angeordnet, anschließend mit einem entsprechenden Werkzeug relativ zueinander und zu dem Ladegutbehälter 2 ausgerichtet und in einer ausgerichteten Position fixiert. In dieser ausgerichteten und fixierten Position werden die Trägeranordnungen 6, d. h. Insbesondere deren Grundkörper 6.1, mit der entsprechenden Behälterwand 2.3, 2.4 verschweißt.

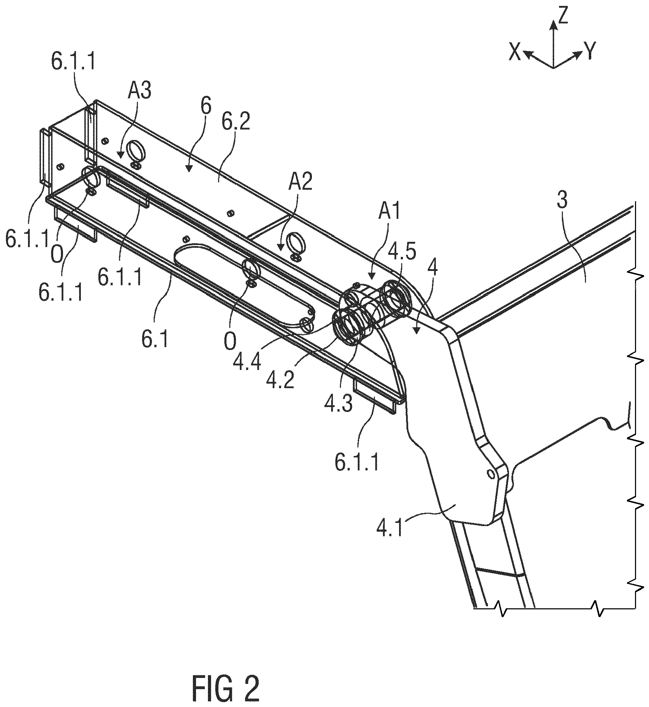

**Figur** 2 zeigt eine perspektivische und teiltransparente Darstellung einer Trägeranordnung 6 und der an dieser mittels des einfachen Pendellagers 4 gelagerten Behälterklappe 3 der Fahrzeugbehälteranordnung 1 gemäß Figur 1.

Das einfache Pendellager 4 umfasst - wie vorab bereits beschrieben - einen Pendelarm 4.1, welcher an einem Ende unbeweglich an der Behälterklappe 3 befestigt ist und an einem anderen Ende mittels des Gelenkbolzens 4.2 schwenkbar an der Trägeranordnung 6 angeordnet ist.

Der Gelenkbolzen 4.2, welcher beispielsweise einen Durchmesser von 30 mm hat, ist beispielsweise mittels als Kunststoff-Gleitlager und somit wartungsfrei ausgebildeten Lagern 4.3 in den gegenüberliegenden Öffnungen O der Aufnahme A1 gelagert und mittels Stiften 4.4 gesichert. Weiterhin ist der Pendelarm 4.1 mittels den Gelenkbolzen 4.2 umgebenden Abstandhülsen 4.5, welche beidseitig neben dem Pendelarm 4.1 zwischen diesem und der jeweiligen Kastenwand angeordnet sind, beabstandet zu den Kastenwänden positioniert.

Der Grundkörper 6.1 umfasst mehrere als Bleche ausgebildete Ausrichtstrukturen 6.1.1, mittels welchen dieser an der entsprechenden Behälterwand 2.3, 2.4 ausgerichtet werden kann.

In **Figur** 3 ist eine perspektivische und teiltransparente Darstellung einer Trägeranordnung 6 und der an dieser mittels eines hochgesetzten Pendellagers 9 gelagerten Behälterklappe 3 der Fahrzeugbehälteranordnung 1 dargestellt. Die Trägeranordnung 6 entspricht der in Figur 2 dargestellten Trägeranordnung 6.

Das hochgesetzte Pendellager 9 umfasst zusätzlich zu dem einfachen Pendellager 4 einen Adapter 9.2, welcher mittels der Befestigungsbolzen 9.1 in den Aufnahmen A1, A2 der Trägeranordnung 6 befestigt ist. Die Befestigungsbolzen 9.1 entsprechen beispielsweise jeweils dem Gelenkbolzen 4.2 und sind beispielsweise mittels als Kunststoff-Gleitlager und somit wartungsfrei ausgebildeten Lagern 9.3 in den gegenüberliegenden Öffnungen O der Aufnahme A1 gelagert und mittels Stiften 9.4 gesichert.

Der Adapter 9.2 umfasst eine oberhalb der Trägeranordnung 6 angeordnete Aufnahme 9.2.1, welche zwei an sich gegenüberliegenden Seiten befindlichen Wänden des Adapters 9.2 befindliche Öffnungen O1 umfasst.

Das hochgesetzte Pendellager 9 umfasst weiterhin einen Pendelarm 9.6, welcher an einem Ende unbeweglich an der Behälterklappe 3 befestigt ist und an einem anderen Ende mittels eines Gelenkbolzens 9.7 schwenkbar an dem Adapter 9.2 angeordnet ist.

Der Gelenkbolzen 9.7, welcher beispielsweise einen Durchmesser von 30 mm hat, ist beispielsweise mittels als Kunststoff-Gleitlager und somit wartungsfrei ausgebildeten Lagern 9.8 in den gegenüberliegenden Öffnungen O1 der Aufnahme 9.2.1 des Adapters 9.2 gelagert und mittels Stiften 9.9 gesichert.

Mittels des Adapters 9.2 erfolgt gegenüber dem einfachen Pendellager 4 aufgrund einer Verlagerung des Gelenkbolzens 9.7 eine Verlagerung der Schwenkachse S der Behälterklappe 3 nach oben.

In **Figur** 4 ist eine perspektivische und teiltransparente Darstellung einer Trägeranordnung 6 und der an dieser mittels eines doppelten Pendellagers 7 gelagerten Behälterklappe 3 der Fahrzeugbehälteranordnung 1 dargestellt. Die Trägeranordnung 6 entspricht der in Figur 2 dargestellten Trägeranordnung 6.

Das doppelte Pendellager 7 umfasst einen ersten Pendelarm 7.2, welcher an einem ersten Ende unbeweglich an der Behälterklappe 3 befestigt ist, und einen zweiten Pendelarm 7.3, welcher an einem ersten Ende schwenkbar an einem zweiten Ende des ersten Pendelarms 7.2 und an einem zweiten Ende mittels eines Gelenkbolzens 7.1 schwenkbar in den sich gegenüberliegenden Öffnungen O der Aufnahme A2 der Trägeranordnung 6 angeordnet ist.

Der Gelenkbolzen 7.1, welcher beispielsweise einen Durchmesser von 30 mm hat, ist beispielsweise mittels als Kunststoff-Gleitlager und somit wartungsfrei ausgebildeten Lagern 7.4 in den gegenüberliegenden Öffnungen O der Aufnahme A2 gelagert und mittels Stiften 7.5 gesichert. Weiterhin ist der Pendelarm 7.3 mittels den Gelenkbolzen 7.1 umgebenden Abstandhülsen 7.6, welche beidseitig neben dem Pendelarm 7.3 zwischen diesem und der jeweiligen Kastenwand angeordnet sind, beabstandet zu den Kastenwänden positioniert.

Auch die schwenkbare Verbindung zwischen dem ersten Pendelarm 7.2 und dem zweiten Pendelarm 7.3 erfolgt mittels eines Gelenkbolzens 7.7, welcher mittels als Kunststoff-Gleitlager ausgebildeten Lagern 7.8 gelagert und mittels Stiften 7.9 gesichert ist.

Im dargestellten ungeschwenkten Zustand des doppelten Pendellagers 7 ist der zweite Pendelarm 7.3 innerhalb des kastenförmigen Profils des Grundkörpers 6.1 der Trägeranordnung 6 angeordnet und mittels eines in seiner Position verstellbaren Anschlags 7.10 in einer Position festgelegt.

**Figur** 5 zeigt eine perspektivische und teiltransparente Darstellung einer Trägeranordnung 6 und der an dieser mittels eines hydraulischen Pendellagers 8 gelagerten Behälterklappe 3 der Fahrzeugbehälteranordnung 1. Die Trägeranordnung 6 entspricht der in Figur 2 und Figur 3 dargestellten Trägeranordnung 6.

Das hydraulische Pendellager 8 umfasst wie das in Figur 3 dargestellte doppelte Pendellager 7 einen ersten Pendelarm 8.2, welcher an einem ersten Ende unbeweglich an der Behälterklappe 3 befestigt ist, und einen zweiten Pendelarm 8.3, welcher an einem ersten Ende schwenkbar an einem zweiten Ende des ersten Pendelarms 7.2 und an einem zweiten Ende mittels eines Gelenkbolzens 8.1 schwenkbar in den sich gegenüberliegenden Öffnungen O der Aufnahme A3 der Trägeranordnung 6 angeordnet ist.

Der Gelenkbolzen 8.1, welcher beispielsweise einen Durchmesser von 30 mm hat, ist beispielsweise mittels als Kunststoff-Gleitlager und somit wartungsfrei ausgebildeten Lagern 8.4 in den gegenüberliegenden Öffnungen O der Aufnahme A2 gelagert und mittels Stiften 8.5 gesichert.

Auch die schwenkbare Verbindung zwischen dem ersten Pendelarm 8.2 und dem zweiten Pendelarm 8.3 erfolgt mittels eines Gelenkbolzens 8.7, welcher mittels als Kunststoff-Gleitlager ausgebildeten Lagern 8.8 gelagert und mittels Stiften 8.9 gesichert ist.

Zusätzlich zu dem doppelten Pendellager 7 ist der zweite Pendelarm 7.3 mit einem nicht näher dargestellten hydraulischen Antrieb gekoppelt, mittels welchem ein Schwenken des zweiten Pendelarms 7.3 um den an der Trägeranordnung 6 angeordneten Gelenkbolzen 8.1 durchführbar ist.

### BEZUGSZEICHENLISTE

- 1: Fahrzeugbehälteranordnung
- 2: Ladegutbehälter
- 2.1: Behälterkörper
- 2.2: Behälterboden
- 2.3: Behälterwand
- 2.4: Behälterwand
- 3: Behälterklappe
- 4: einfaches Pendellager
- 4.1: Pendelarm
- 4.2: Gelenkbolzen
- 4.3: Lager
- 4.4: Stift
- 4.5: Abstandshülse
- 5: Sicherheitssperre
- 6: Trägeranordnung
- 6.1: Grundkörper
- 6.1.1: Ausrichtstruktur
- 6.2: Abdeckung
- 7: doppeltes Pendellager
- 7.1: Gelenkbolzen
- 7.2: erster Pendelarm
- 7.3: zweiter Pendelarm
- 7.4: Lager
- 7.5: Stift
- 7.6: Abstandshülse
- 7.7: Gelenkbolzen
- 7.8: Lager
- 7.9: Stift
- 7.10: Anschlag
- 8: hydraulisches Pendellager
- 8.1: Gelenkbolzen
- 8.2: erster Pendelarm
- 8.3: zweiter Pendelarm
- 8.4: Lager
- 8.5: Stift
- 8.7: Gelenkbolzen
- 8.8: Lager
- 8.9: Stift
- 9: hochgesetztes Pendellager
- 9.1: Befestigungsbolzen
- 9.2: Adapter
- 9.2.1: Aufnahme
- 9.3: Lager
- 9.4: Stift
- 9.6: Pendelarm
- 9.7: Gelenkbolzen
- 9.8: Lager
- 9.9: Stift

- A1: Aufnahme
- A2: Aufnahme
- A3: Aufnahme
- O: Öffnung
- O1: Öffnung
- S: Schwenkachse
- X: Längsachse
- Y: Querachse
- Z: Hochachse

## Patentansprüche

1. Ladegutbehälter (2) für ein Fahrzeug mit
- einem Behälterkörper (2.1), welcher zumindest eine Behälteröffnung aufweist und
- zumindest zwei an gegenüberliegenden Behälterwänden (2.3, 2.4) des Behälterkörpers (2.1) angeordneten Trägeranordnungen (6), welche jeweils zur Aufnahme von mehreren verschiedenen Lagertypen zu einer pendelnden Lagerung einer die Behälteröffhung verschließenden Behälterklappe (3) ausgebildet sind.

2. Ladegutbehälter (2) nach Anspruch 1, wobei die Lagertypen
- ein einfaches Pendellager (4) und/oder
- ein hochgesetztes Pendellager (9) und/oder
- ein doppeltes Pendellager (7) und/oder
- ein hydraulisches Pendellager (8)
umfassen.

3. Ladegutbehälter (2) nach Anspruch 1 oder 2, wobei die Trägeranordnungen (6) jeweils einen Grundkörper (6.1) aufweisen, welcher jeweils mehrere in unterschiedlichen Positionen angeordnete Aufnahmen (A1 bis A3) für Gelenkbolzen (4.2, 7.1, 8.1) und/oder Befestigungsbolzen (9.1) der verschiedenen Lagertypen umfasst.

4. Ladegutbehälter (2) nach Anspruch 3, wobei der Grundkörper (6.1) als kastenförmiges Profil ausgebildet ist und eine Aufnahme (A1 bis A3) für einen Gelenkbolzen (4.2, 7.1, 8.1) und/oder Befestigungsbolzen (9.1) jeweils zwei an sich gegenüberliegenden Seiten befindlichen Kastenwänden des Profils befindliche Öffnungen (O) umfasst.

5. Ladegutbehälter (2) nach Anspruch 4, wobei das Profil einen Raum zur Aufnahme eines mittels eines Gelenkbolzens (7.1, 8.1) gelagerten Pendelarms (7.3, 8.3) umfasst.

6. Ladegutbehälter (2) nach Anspruch 5, wobei das Profil einen Anschlag (7.10) zur Festlegung einer Position des Pendelarms (7.3) in einem ungeschwenkten Zustand umfasst.

7. Ladegutbehälter (2) nach einem der Ansprüche 3 bis 6, wobei an dem Grundkörper (6.1) mehrere Ausrichtstrukturen (6.1.1) angeordnet sind, mittels welchen der Grundkörper (6.1) an der entsprechenden Behälterwand (2.3, 3.4) ausgerichtet ist.

8. Ladegutbehälter (2) nach einem der vorhergehenden Ansprüche, wobei die Trägeranordnungen (6) jeweils mit der entsprechenden Behälterwand (2.3, 2.4) verschweißt sind.

9. Ladegutbehälter (2) nach einem der vorhergehenden Ansprüche, umfassend einen Behälterboden (2.2), wobei
- die zwei gegenüberliegenden Behälterwände (2.3, 2.4) nach oben vom Behälterboden (2.2) abragen und
- die Trägeranordnungen (6) jeweils beabstandet vom Behälterboden (2.2) an den Behälterwänden (2.3, 2.4) angeordnet sind.

10. Ladegutbehälter (2) nach einem der vorhergehenden Ansprüche, ausgebildet als Kippmulde für ein Fahrzeug.

11. Verfahren zur Herstellung eines Ladegutbehälters (2) für ein Fahrzeug, wobei zumindest zwei Trägeranordnungen (6), welche jeweils zur Aufnahme von mehreren verschiedenen Lagertypen zu einer pendelnden Lagerung einer die Behälteröffhung verschließenden Behälterklappe (3) ausgebildet sind,
- an gegenüberliegenden Behälterwänden (2.3, 2.4) des Behälterkörpers (2.1) angeordnet werden,
- relativ zueinander und zu dem Ladegutbehälter (2) ausgerichtet und in einer ausgerichteten Position fixiert werden und
- jeweils in der ausgerichteten Position mit der entsprechenden Behälterwand (2.3, 2.4) verschweißt werden.

12. Fahrzeugbehälteranordnung (1), umfassend einen Ladegutbehälter (2) nach einem der Ansprüche 1 bis 10 und eine pendelnd an diesem aufgehängte Behälterklappe (3).

13. Fahrzeugbehälteranordnung (1) nach Anspruch 12, wobei zwei Pendellager eines Lagertyps vorgesehen sind, welche jeweils an einer Trägeranordnung (6) und an der Behälterklappe (3) derart befestigt sind, dass zwischen den Pendellagern eine Schwenkachse (S) der Behälterklappe (3) ausgebildet ist.

14. Fahrzeugbehälteranordnung (1) nach Anspruch 12 oder 13, wobei
- ein als einfaches Pendellager (4) ausgebildeter Lagertyp einen Pendelarm (4.1) umfasst, welcher an einem Ende unbeweglich an der Behälterklappe (3) befestigt ist und an einem anderen Ende mittels eines Gelenkbolzens (4.2) schwenkbar an der Trägeranordnung (6) angeordnet ist,
- ein als hochgesetztes Pendellager (9) ausgebildeter Lagertyp einen Pendelarm (9.6) umfasst, welcher an einem Ende unbeweglich an der Behälterklappe (3) befestigt ist und an einem anderen Ende mittels eines Gelenkbolzens (9.7) schwenkbar an einem an der Trägeranordnung (6) mittels Befestigungsbolzen (9.1) befestigten Adapter (9.2) angeordnet ist, wobei der Adapter (9.2) zumindest eine Aufnahme (9.2.1) für den Gelenkbolzen (9.7) umfasst, welche oberhalb der Trägeranordnung (6) angeordnet ist,
- ein als doppeltes Pendellager (7) ausgebildeter Lagertyp einen ersten Pendelarm (7.2) umfasst, welcher an einem ersten Ende unbeweglich an der Behälterklappe (3) befestigt ist, und einen zweiten Pendelarm (7.3) umfasst, welcher an einem ersten Ende schwenkbar an einem zweiten Ende des ersten Pendelarms (7.2) und an einem zweiten Ende mittels eines Gelenkbolzens (7.1) schwenkbar an der Trägeranordnung (6) angeordnet ist, und
- ein als hydraulisches Pendellager (8) ausgebildeter Lagertyp ein doppeltes Pendellager umfasst, bei welchem der zweite Pendelarm (8.3) mit einem hydraulischen Antrieb gekoppelt ist, mittels welchem ein Schwenken des zweiten Pendelarms (8.3) um den an der Trägeranordnung (6) angeordneten Gelenkbolzen (8.1) durchführbar ist.

15. Fahrzeugbehälteranordnung (1) nach einem der Ansprüche 12 bis 14, wobei
- der Ladegutbehälter (2) eine um zumindest eine Kippachse schwenkbare Kippmulde ist und
- die Behälterklappe (3) eine Heckklappe ist, welche um eine Schwenkachse (S) pendelnd gelagert ist, die zumindest im Wesentlichen parallel zu der Kippachse verläuft.
